Europäisches Patentamt

(19) European Patent Office

Office européen des brevets

(11) EP 0 725 396 A2

(12) EUROPEAN PATENT APPLICATION

(43) Date of publication:
07.08.1996 Bulletin 1996/32

(51) Int. Cl.$^6$: **G11B 7/24**, G11B 7/095

(21) Application number: 96101280.4

(22) Date of filing: 30.01.1996

(84) Designated Contracting States:
DE FR GB NL

(30) Priority: 31.01.1995 JP 14644/95

(71) Applicant: **KABUSHIKI KAISHA TOSHIBA**
**Kawasaki-shi (JP)**

(72) Inventors:
• **Honguh, Yoshinori**
 **Minato-ku, Tokyo 105 (JP)**
• **Kobori, Hiromichi**
 **Minato-ku, Tokyo 105 (JP)**
• **Hoshino, Isao**
 **Minato-ku, Tokyo 105 (JP)**
• **Ohkubo, Yoshiyuki**
 **Minato-ku, Tokyo 105 (JP)**

(74) Representative: **Henkel, Feiler, Hänzel & Partner**
 **Möhlstrasse 37**
 **81675 München (DE)**

Remarks:
A request for correction of the claims has been filed pursuant to Rule 88 EPC. A decision on the request will be taken during the proceedings before the Examining Division (Guidelines for Examination in the EPO, A-V, 3.).

(54) **Optical disk and optical disk apparatus**

(57) An optical disk comprises a first member (111), which has a disk-shaped first transmission substrate (101), a reflecting layer (103) provided on the first transmission substrate (101), and a protective layer (105) provided on the reflecting layer (103), for recording the desired information, an adhesive layer (107) having a first surface and a second surface bonded to the protective layer (105), and a second member (112) having at least a second transmission substrate (102) bonded to the first surface of the adhesive layer (107), wherein the thickness of the optical disk is 1.19 mm or more and the degree of a deviation in said optical disk rotating at a specific rotation speed is within ± 0.3 °.

FIG. IC

FIG. ID

FIG. IE

FIG. IF

FIG. IA

FIG. IB

EP 0 725 396 A2

Printed by Rank Xerox (UK) Business Services
2.13.0/3.4

## Description

This invention relates to an optical disk and an optical disk apparatus.

With recent advances in the digital signal processing techniques and in the moving-picture compressing techniques promoted by standardizing organizations, including the MPEG (Moving Picture Image Coding Experts Group), there have been great demands toward optical disks of the same size as that of a CD (compact disk) and capable of reproducing moving-picture information such as a movie for a long time, in place of VTRs and laser disks. For example, when two hours of moving-picture information is recorded in the form of analog video signal using a standard TV system, such as the NTSC, as with a laser disk, the capacity required amounts to 80 Gbytes (giga-bytes) including audio. Use of the moving-picture compressing techniques prescribed by a standardization scheme called MPEG2, however, requires only a capacity of about 4 Gbytes to record two hours of image information, even if the picture quality is as good as that of a high picture quality VTR, such as S-VHS. The 4 Gbyte capacity is already in practical use with postscript-type optical disks of 300 mm in diameter and will be used more and more for household purposes in the future. In this situation, it will be needed to realize an easy-to-handle 120 mm diameter CD with almost the same capacity. That is, the recording density of optical disks must be made higher than that of the currently used CDs.

To raise the recording density of an optical disk, smaller pits are made in an optical disk at a smaller track pitch and the spot size of a reproducing light beam focused on the optical disk is made smaller so that minute pits on the optical disk can be read in the reproduction optical system. For pit processing techniques, for example, optical disk matrix recording techniques using Kr ion laser light (ultraviolet light) with a wavelength of 351 nm have been proposed and enables the formation of smaller pits than those formed with a conventional Ar ion laser. With the reproduction optical system, use of a reproducing light beam of shorter wavelength from a short-wavelength light source, such as a red LD, and an increase in the NA of an objective lens enable the beam spot diameter to be made smaller. Advances in these techniques have enabled compressed moving picture information by MPEG2 to be recorded more than two hours on a single-sided optical disk and more than five hours on a double-sided optical disks.

When the compressed moving-picture information by MPEG2 is recorded onto or reproduced from an optical disk, the total error rate in the recording/reproducing system, that is, the error rate of the compressed moving picture information finally inputted to the MPEG2 decoder, is required to be about $10^{-20}$ or less. The error rate is expressed by the number of error bits per byte. The error rate of the compressed moving-picture information is alleviated in such signal processes as the waveform equalization or error correction of the reproduced signal from the optical disk. The maximum reduction of the error rate by the signal processing is presently $10^{-16}$. To realize a total error of $10^{-20}$, the error rate due to the optical disk itself must be made less than $10^{-4}$. At present, however, concrete measures to make the error rate due to the optical disk itself less than $10^{-4}$ has not been found.

As described above, when the compressed moving-picture information by MPEG2 is recorded onto or reproduced from an optical disk, the error rate of the reproduced compressed moving picture information must be less about $10^{-20}$ or less. When the effect of reducing the error rate by such signal processes as waveform equalization or error correction is taken into account, it is necessary to make the error rate due to the optical disk itself $10^{-4}$ or less. In the prior art, however, concrete measures to meet the requirements have not been proposed.

The object of the present invention is to provide an optical disk capable of reducing the error rate due to an optical disk itself to $10^{-4}$ or less and an optical disk apparatus using the optical disk.

A first aspect of an optical disk according to the present invention comprises: a first member, which has a disk-shaped first transparent substrate, a reflecting layer provided on said first transparent substrate, and a protective layer provided on said reflecting layer, for recording the desired information; an adhesive layer having a first surface and a second surface bonded to said protective layer; and a second member having at least a second transparent substrate bonded to the first surface of said adhesive layer, and the thickness of said optical disk is 1.19 mm or more and the degree of a deviation in said optical disk rotating at a specific rotation speed is within ± 0.3 °. Furthermore, the thickness of said optical disk is 1.32 mm or less.

A second aspect of an optical disk according to the present invention comprises: a first member, which has a disk-shaped first transparent substrate, a reflecting layer provided on said first transparent substrate, and a protective layer provided on said reflecting layer, for recording the desired information; an adhesive layer having a first surface and a second surface bonded to said protective layer; and a second member having at least a second transparent substrate bonded to the first surface of said adhesive layer, and the thickness of each of said first and second transparent substrate is 0.58 mm or more and 0.64 or less.

A third aspect of an optical disk according to the present invention comprises: a first member, which has a disk-shaped first transparent substrate, a reflecting layer provided on said first transparent substrate, and a protective layer provided on said reflecting layer, for recording the desired information; an adhesive layer having a first surface and a second surface bonded to said protective layer; and a second member having at least a second transparent substrate bonded to the first surface of said adhesive layer, characterized in that the degree of a deviation in said optical disk rotating at a specific rotation speed is within ± 0.3 °. With this configuration, the specific rotation speed is 1350 rpm.

Preferred embodiments of the present invention are as follows.

(1) The second member further includes a reflecting layer provided on said second transparent substrate and a protective layer provided on said reflecting layer, and records the desired information.
(2) The diameter of at least said first transparent substrate is 119.7 mm or more and 120.3 mm or less.
(3) At least said first transparent substrate is made of a material whose refractive index is 1.45 or more and 1.65 or less.
(4) The material of at least said first transparent substrate is one of polycarbonate and a resin including polycarbonate, and PMMA.
(5) The adhesive layer is made of hot-melt adhesive.
(6) The reflecting layer is made of an aluminum film.
(7) The protective layer is made of photo-setting resin.
(8) At least said first transparent substrate is flexible and said optical disk is more rigid than said first transparent substrate.
(9) The degree of a deviation in at least said first transparent substrate rotating at said specific rotation speed exceeds the range of ± 0.3 °.

Another optical disk according to the present invention comprises: a first member, which has a disk-shaped first transparent substrate, a reflecting layer provided on said first transparent substrate, and a protective layer provided on said reflecting layer, for recording the desired information; an adhesive layer having a first surface and a second surface bonded to said protective layer; and a second member having at least a second transparent substrate bonded to the first surface of said adhesive layer, wherein the degree of a deviation in at least said first transparent substrate rotating at said specific rotation speed exceeds the range of ± 0.3 °, and the degree of a deviation in said optical disk rotating at said specific rotation speed is within ± 0.3 °.

The main point of the invention lies in determining the extent to which the degree of a deviation in the optical disk should be suppressed to achieve the desired error rate or less. In the second aspect of the invention, if the degree of a deviation in the optical disk rotating at a specific rotation speed (1350 rpm) is ± 0.3 ° or less, this will assure the desired error rate ($10^{-4}$) or less.

The degree of a deviation in the optical disk depends on the total thickness of the optical disk. Actually, it was verified by experiments that the degree of deviation can be suppressed to within ± 0.3 ° by making the total thickness of the optical disk 1.19 mm or more. The first aspect of the invention is characterized that the optical disk has such a thickness. The thickness of the substrates accounts for most of the total thickness of the optical disk. Because the optical disk is formed by laminating two substrates (including the reflecting layer 103 and the protective layer 105) together, making the respective substrates 0.58 mm or more in thickness results in an optical disk with a total thickness of 1.19 mm or more.

Because the degree of a deviation in the optical disk of the invention rotating at a specific rotation speed (e.g., 1350 rpm during reproduction) is within ± 0.3 °, the error rate due to the optical disk itself is suppressed to $10^{-4}$ or less. Therefore, even when the compressed moving-picture information recorded according to the MPEG2 standard is reproduced, the error rate of the compressed moving-picture information inputted to the MPEG decoder can be reduced to about $10^{-20}$ or less required in practical use to maintain the desired picture quality, as a result of the effects of reducing the error rate by such signal processing as waveform equalization or error correction.

Furthermore, when the substrate is made too thick to increase the total thickness of the optical disk, the aberration of the light beam caused at the substrate due to the inclination of the optical disk to the light beam increases, which results in a decrease in the window margin in performing data identification at the signal processing system for the reproduced signals and an increase in the error rate. To solve this problem, the upper limit of the substrate thickness is set to 0.64 mm to secure 10% or more for the window margin, which enables the error rate due to the optical disk itself to be suppressed to $10^{-4}$ or less. This was verified by experiments. In this case, the upper limit of the total thickness of the optical disk is 1.32 mm.

The optical disk has a recording area and a nonrecording area inside the recording area. It is expected that the nonrecording area will be thicker than the recording area because a label or the like will be put on part of the nonrecording area. For instance, if the thickness of the label is 0.1 mm, the thickness of the optical disk at the nonrecording area will be 1.29 mm or more and 1.52 mm or less.

An optical disk apparatus according to the present invention comprises: an optical disk using above described optical disk; rotating means for rotating said optical disk at a specific rotation speed; light projecting means for projecting a light beam on said optical disk via an objective lens; light sensing means for sensing the reflected light of the light beam projected by said light projecting means on said optical disk; signal reproducing means for producing from the output signal of said light sensing means a reproduced signal corresponding to the information recorded on said optical disk; and information restoring means for restoring the information recorded on said optical disk from the reproduced signal supplied from said reproducing means, wherein the tilt angle of said optical disk to said light beam, including the degree of a deviation in said optical disk rotating at said specific rotation speed, is 10 mrad or less.

The signal reproducing means includes data identifying means for identifying data in the reproduced signal equalized at said waveform equalization means, and waveform equalization means for equalizing the waveform of said reproduced signal, and said information restoring means includes error correcting means for correcting errors in the data obtained at said data identifying means, and decoding means for restoring the information recorded on said optical disk by decoding the data subjected to error correction at said error correcting means. The numerical aperture of said objective lens is almost 0.6 and the wavelength of said light beam is almost 650 nm.

With the optical disk apparatus of the invention, use of the optical disk in the second aspect of the invention suppresses to 10 mrad or less the tilt angle of the optical disk to the light beam including the degree of a deviation in the optical disk rotating at a specific rotation speed (e.g., 1350 rpm). The optical disk's tilt angle of 10 mrad or less to the light beam is in the allowable range required to suppress the error rate of the reproduced signal inputted to, for example, the processing system to $10^{-4}$ or less. With the optical disk of the invention, by limiting the degree of a deviation in the optical disk rotating at the specific rotation speed to within $\pm 0.3°$ (about $\pm 5.24$ mrad), the requirements for the accuracy of the optical head installation angle are eased.

As described above, with the present invention, by determining the degree of a deviation in the entire optical disk rotating at the specific rotation speed, the total thickness of the optical disk, and the substrate thickness, the error rate due to the optical disk itself can be suppressed to $10^{-4}$ or less.

Accordingly, with the present invention, it is possible to provide an optical disk and an optical disk apparatus which can reduce the error rate of the compressed moving picture information recorded according to the MPEG2 standard to $10^{-20}$ required for practical use, as a result of the effect of reducing the error rate by such signal processing as waveform equalization or error correction, and which then can input the information to an MPEG decoder.

This invention can be more fully understood from the following detailed description when taken in conjunction with the accompanying drawings, in which:

FIGS. 1A to 1F are a perspective view and a sectional view of an optical disk according to an embodiment of the present invention;
FIG. 2 is a block diagram of an optical disk apparatus;
FIG. 3 is a drawing to help explain a deviation in an optical disk;
FIG. 4 is a drawing to help explain the inclination of an optical disk;
FIGS. 5A and 5B show the relationship between the degree of a deviation along the radius of the optical disk and along the circumference of the disk and the error rate attributable to the optical disk;
FIG. 6 is a diagram to help explain the total thickness of the optical disk and the degree of a deviation in the disk;
FIG. 7 is a drawing to help explain the diameters at various places of the optical disk;
FIG. 8 is a drawing to help explain the thicknesses at various places of the optical disk;
FIG. 9 a drawing to help explain the shape of a pit in the optical disk;
FIG. 10 shows the relationship between the position of light beams on the optical disk and the reproduced signal;
FIG. 11 is a block diagram of the waveform equalization circuit in the signal processing circuit of FIG. 2;
FIG. 12 shows the relationship between the thickness of the optical disk substrate and the window margin;
FIG. 13 is a table listing the window occupation rates and calculation results of window margins with respect to the thickness of the optical disk; and
FIG. 14 shows the relationship between the refractive index of the optical disk and the thickness of the optical disk using the rms values of aberration as parameters.

Hereinafter, referring to the accompanying drawings, an embodiment of the present invention will be explained.

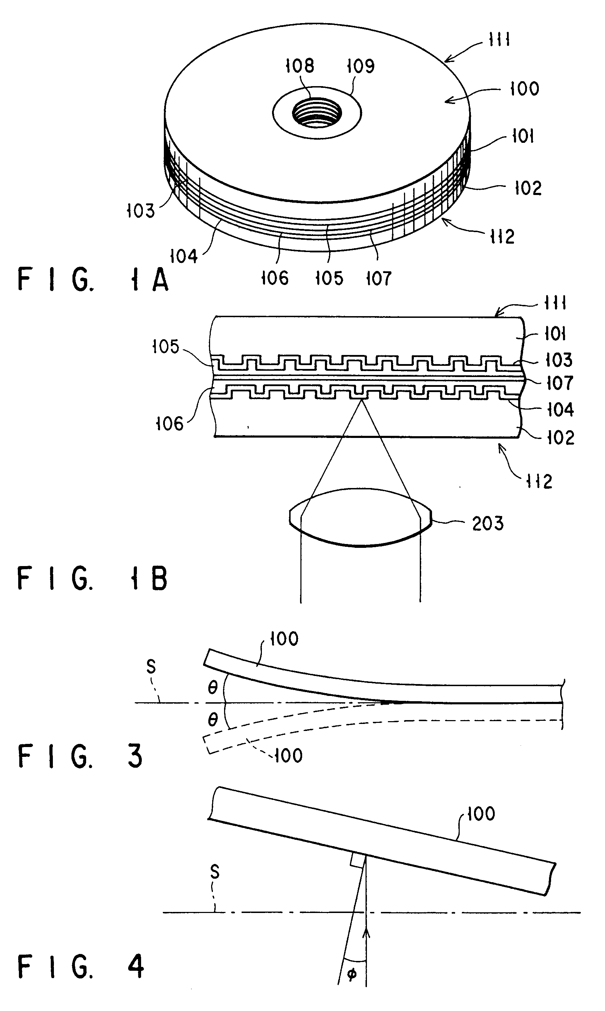

FIGS. 1A and 1B are a perspective view and a sectional view of an optical disk 100 according to an embodiment of the present invention.

With the optical disk of the present invention, the one-side surfaces of disk-like transparent substrates 101 and 102 in which pits are made according to the recording information such as compression moving picture information are clad with reflecting layers 103 and 104, respectively. On the reflecting layers, protective layers 105 and 106 are formed to chiefly prevent the reflecting layer 103, 104 from being oxidized, thereby producing a first and second information recording members 111 and 112. The first and second information recording members 111, 112 are laminated together with an adhesive layer 107 made of thermosetting adhesive into a unity, with the protective layers 105 and 106 facing each other, thereby forming the optical disk 100. Made in the center of the optical disk 100 is a clamping hole 108, around whose periphery a clamping zone 109 is provided.

Although FIGS. 1A and 1B show an optical disk having the first and second information recording members on both sides of the adhesive layer 107, respectively, the invention may be applied to an optical disk having information recording member on one side only. In this case, when the optical disk has only the first information recording member, the second information recording member may be of a structure that need not record any information as follows:

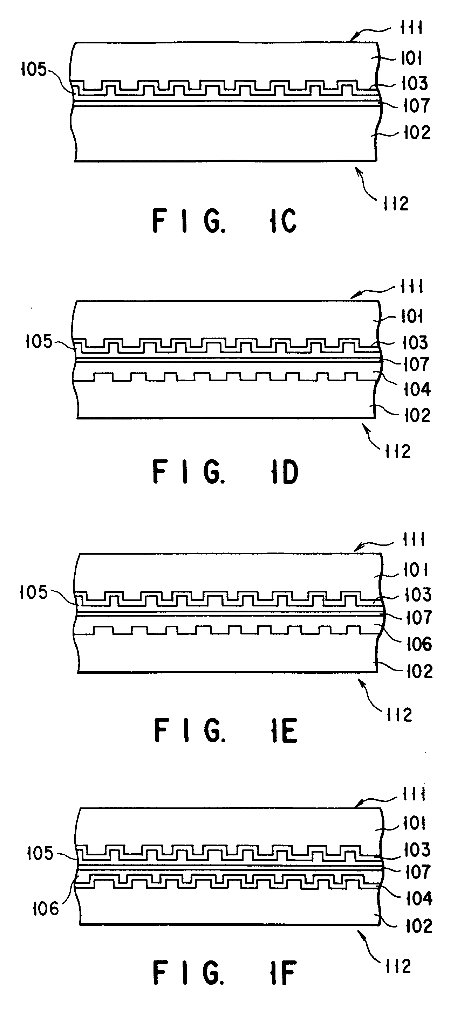

(1) a transparent substrate only (FIG. 1C)
(2) a transparent substrate and a reflecting layer (FIG. 1D)
(3) a transparent substrate and a protective layer (FIG. 1E)
(4) a transparent substrate, a reflecting layer, and a protective layer (FIG. 1F)

Of these, although the structure of item (4) is the same as that of the first information recording member, it need not record information and therefore may not be a structure where the second information recording member has pits shown in FIG. 1B. The same reasoning holds true for items (2) and (3).

Explanation of materials of the respective parts will be given. The substrates 101, 103 are made of polycarbonate, PMMA (polymethyl methacrylate), or resin such as resin including at least one of them as chief elements. The reflecting layers 103, 104 are made of an aluminum thin film. The protective layers 105, 106 are made of photo-setting resin (ultraviolet-curing resin). The adhesive layer 107 is made of hot-melt adhesive (thermoplastic adhesive), such as a material of the polyether paraffin series: $[-CH_2-CH=CH-CH_2]_n-[CH_2-CH(OCH_3)-]_{n'}$.

During reproduction, the reproducing light beam emitted from an LD (not shown) travels through the reproduction optical system, passes through an objective lens 203, enters the optical disk 100 on the transparent substrate 101 (or 102) side, and is focused on the reflecting layer 103 (or 104) as a very small beam spot. The reflected light from the reflecting layer 103 (or 104) passes through the objective lens 203 in the opposite direction of the incident light and then advances along an optical path separated from the optical path of the incident light in the reproduction optical system, and is sensed by a photo-detector (not shown).

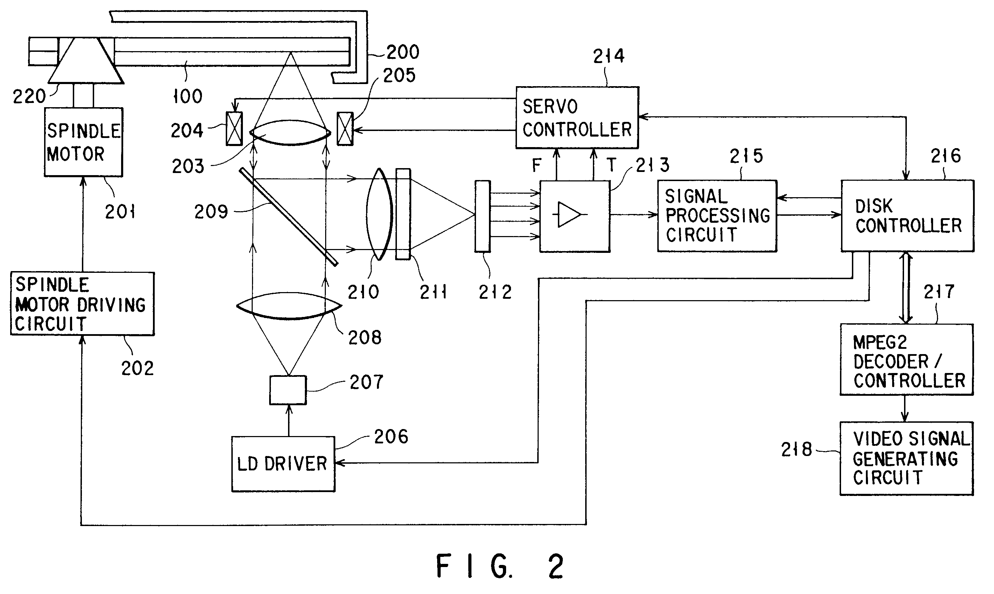

FIG. 2 shows an embodiment of an optical disk apparatus that reproduces the compressed moving-picture information recorded on the optical disk 100. In FIG. 2, since the optical disk 100 uses the substrates 101, 102 of about 0.6 mm thick as explained later, to strengthen from dust or dirt on its surface than a CD using a 1.2-mm-thick substrate, the disk may be housed in a cartridge 200. Unlike a CD, with the optical disk 100 housed in the cartridge 200, the user need not be cautious in handling the disk or pay attention to dust and dirt, which makes it easier to handle and carry the disk. If the disk is exposed like a CD, error correction capability must be determined, taking into account an unexpected accident, such as a scratch. Use of the cartridge 200 makes such a consideration unnecessary, which enables the Reed-Solomon error correction scheme to be used in sectors as with a recording/reproducing optical disk. This improves the recording efficiency 10% or more as compared with a CD, when the formatting of the optical disk is effected in units of, for example, 2 to 4 kbytes (kilo-bytes).

For example, the 4/9 modulation scheme is used as a modulation scheme for recording the information on the optical disk 100. If the track pitch on the optical disk 100 is set at 0.72 μm and the pit pitch is set at 0.96 μm, it is expected that the pit density ratio will be 3.84 times as high as that of a conventional CD format, the modulation scheme will be 20% better than and the format efficiency will be 10% higher than the conventional CD format. As a result, a total capacity of about 5.1 times as large as that of the conventional CD format can be expected. When moving-picture information, such as a movie, is reproduced at a picture quality as high as S-VHS as described above, the rate amounts to 4.5 Mbps (megabit per second) including audio, with the result that the capacity needed for two hours of reproduction is 4 Gbytes. Because the capacity is 5.1 times as large as that of a conventional CD, the capacity of 4 Gbytes can be realized on a single side of the disk. Furthermore, when the optical disk 100 is made double-sided as shown in FIGS. 1A and 1B, recording can be effected for 4 to 5 hours at maximum on a single optical disk.

In FIG. 2, the optical disk 100 is caught on a taper cone 220 and rotated by a spindle motor 201 at a rotation speed of, for example, 1350 rpm. The spindle motor 201 is driven by a spindle motor driving circuit 202.

The reproduction optical system is constructed as follows.

The objective lens 203 of FIG. 1B is placed so as to face the optical disk 100. The objective lens 203 can be moved along the optical axis by a focusing coil 204 and across the track width by a tracking coil 205. The LD (laser diode) 207 is driven by an LD driver 206 and has an oscillation wavelength of, for example 650 nm. The light beam emitted from the LD 207 is gathered by a collimate lens 208 into a parallel luminous flux and then goes into a polarizing beam splitter 209. Because the light beam emitted from the DL 207 generally has an elliptical far field pattern, when a round pattern is needed, a beam shaping prism (not shown) should be provided behind the collimate lens 208. The light beam passed though the polarizing beam splitter 209 is condensed at the objective lens 203 and enters the optical disk 100 on the substrate 101 (or 102) side. The numerical aperture NA of the objective lens 203 is, for example, 0.6.

The light reflected at the reflecting layer 103 (or 104) of the optical disk 100 passes through the objective lens 203 in the opposite direction of the incident light beam, is reflected at the polarizing beam splitter 209, travels through the sensing optical system including a lens 210 and a cylindrical lens 211, and enters a photo-detector 212. The photo-detector 212 is, for example, a four-quadrant sensor, whose four sensing outputs are inputted to an amplifier array 213 containing an amplifier and an adder-subtracter. The amplifier array 213 generates a focus error signal F, a tracking error signal T, and a reproduced signal. The tracking error signal T is produced by push-pull techniques as a push-pull signal. The focus error signal F and the tracking error signal T are supplied via a servo controller 214 to a focusing coil 204 and a tracking coil 205, respectively. This causes the objective lens 203 to be moved along the optical axis and across the track width, thereby effecting not only the focusing of the light beam on the surface of the reflecting layer 103 (or 104) serving as the recording face of the disk 100, but also the tracking of the target track.

The reproduced signal from the amplifier array 213 is inputted to a signal processing circuit 215, which performs waveform equalization and binarization and produces a reproduced signal corresponding to the information recorded on the optical disk. The details of waveform equalization will be explained later. In the binarizing process, the reproduced signal after the waveform equalization is directed to a PLL (phase lock loop) and a data identification circuit. From the reproduced signal, the PLL extracts the channel clock, which is the basic clock used in recording the information on the optical disk 100. On the basis of the channel clock, "0" and "1" are identified, thereby effecting the identification of the information recorded on the optical disk 100 and producing the data pulses. Specifically, the data identification is performed by comparing the reproduced signal after the waveform equalization with a suitable threshold value within a specific duration (referred to as the detection window width or the window width) on the basis of the timing of the rising or falling of the channel clock.

The data pulses sensed at the signal processing circuit 215 is inputted to a disk controller 216. The disk controller 216 deciphers the format and corrects errors, thereby restoring the information recorded on the optical disk. The signal restored at the disk controller 216 is inputted to a MPEG2 decoder/controller 217 as a bit stream of moving-picture information. With the optical disk 100, the data obtained by compressing and encoding the moving-picture information according to the MPEG2 standard is recorded as a bit pattern on the substrates 101, 102. Then, the MPEG2 decoder/controller 217 decodes (or expands) the inputted bit stream and reproduces the original moving-picture information. The reproduced moving-picture information is inputted to a video signal generating circuit 218, which adds signals including a blanking signal to the reproduced information to form a video signal of a specific television format, such as the NTSC format. The video signal is allowed to appear on a display (not shown).

While in the above disk apparatus, moving pictures are recorded on the optical disk, the present invention is not limited to this. For instance, when data other than moving picture data (e.g., application programs or acoustic data) is reproduced, the disc controller 216 may output digital data to, for example, the main memory, followed by a specified process.

The optical disk 100 of the invention will be explained in further detail.

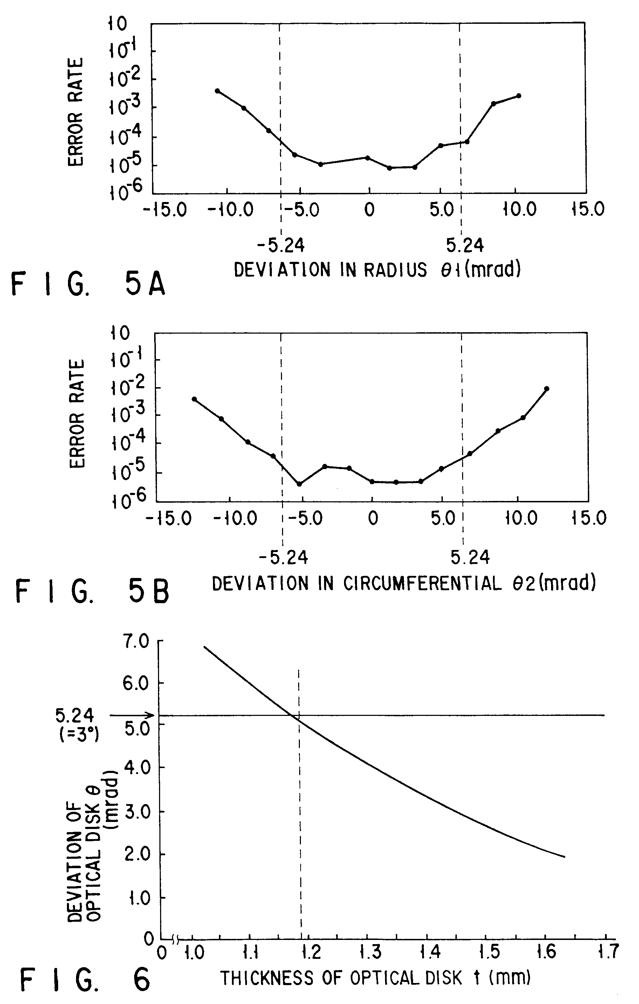

FIG. 3 exaggeratedly shows the state where the optical disk 100 is being rotated by the spindle motor 201 at a specific rotation speed (e.g., 1350 rpm). The present invention is characterized by constructing the optical disk 100 so that the degree of a deviation in the disk 100 at a rotation speed of 1350 rpm (hereinafter, just referred to as the degree of a deviation), that is, the angle θ of the optical disk 100 to a reference plane S, may be within ± 0.3 ° (nearly 5.24 mrad). The reference plane S is a plane perpendicular to the axis of rotation of the optical disk 100 (i.e., the axis of rotation of the spindle motor 201 in FIG. 2). The optical disk 100 as a whole deviates upward as shown by the solid line and downward as shown by the broken line with respect to the reference plane S. The optical disk 100 may deviate locally upward or downward. With the invention, by suppressing the degree θ of a deviation in the optical disk 100 within ± 0.3 °, the error rate of the reproduced signal related to the optical disk 100 itself can be made $10^{-4}$ or less as expected originally.

FIG. 4 shows the angle φ (referred to as the disk tilt angle) formed where the reproducing light beam entering the optical disk 100 via the objective lens 203 crosses a line perpendicular to the face of the optical disk 100.

Ideally, the optical beam should strike the face of the optical disk 100 at an angle of 90 °. Actually, however, the optical disk deviates from the angle of 90 ° to the light beam, because of factors related to the medium, such as a deviation in the optical disk 100, and factors associated with the apparatus, such as an error in the installation angle of the optical head of FIG. 2 (the portion containing the objective lens 203, focusing coil 204, tracking coil 205, LD 207, collimate lens 208, polarizing beam splitter 209, the lens 210, and cylindrical lens 211). The deviation is referred to as the disk tilt angle. The amount of the deviation, that is, the disk tilt angle φ, is attributable to the factors related to the medium, such as a deviation in the optical disk 100, and the factors associated with the apparatus, such as an error in the installation angle of the optical head. Actually, the disk tilt angle φ is related to the error rate of the reproduced signal. It is desirable the disk tilt angle should be suppressed to 10 mrad or less.

FIGS. 5A and 5B show the data obtained by actually measuring the relationship between the degree θ of a deviation in the optical disk 100 and the error rate due to the optical disk 100. In FIG. 5A, the abscissa indicates the degree of a deviation θ1 across the radius (the track width) of the optical disk 100. In FIG. 5B, the abscissa represents the degree of a deviation θ2 along the circumference (along the track) of the optical disk 100. As seen from FIGS. 5A and 5B, to suppress the error rate due to the optical disk 100 to $10^{-4}$ or less both across the radius and along the circumference, the degree θ of deviation (θ1, θ2) should be suppressed to within ± 5.24 mrad, that is, within ± 0.3 ° as described earlier.

The degree $\theta$ of a deviation in the optical disk 100 depends largely on the thickness (total thickness) t of the optical disk 100. The larger the total thickness t, the smaller the degree $\theta$ of deviation. FIG. 6 shows the relationship between the total thickness t of the optical disk 100 and the degree $\theta$ of deviation. From FIG. 6, it is apparent that with the total thickness t of the optical disk 100 being 1.19 mm or more, the degree $\theta$ of deviation can be suppressed to within ± 5.24 (mrad), that is, within ± 0.3 ° at 1350 rpm.

A concrete example of the dimensions of various parts of the optical disk 100 will be described.

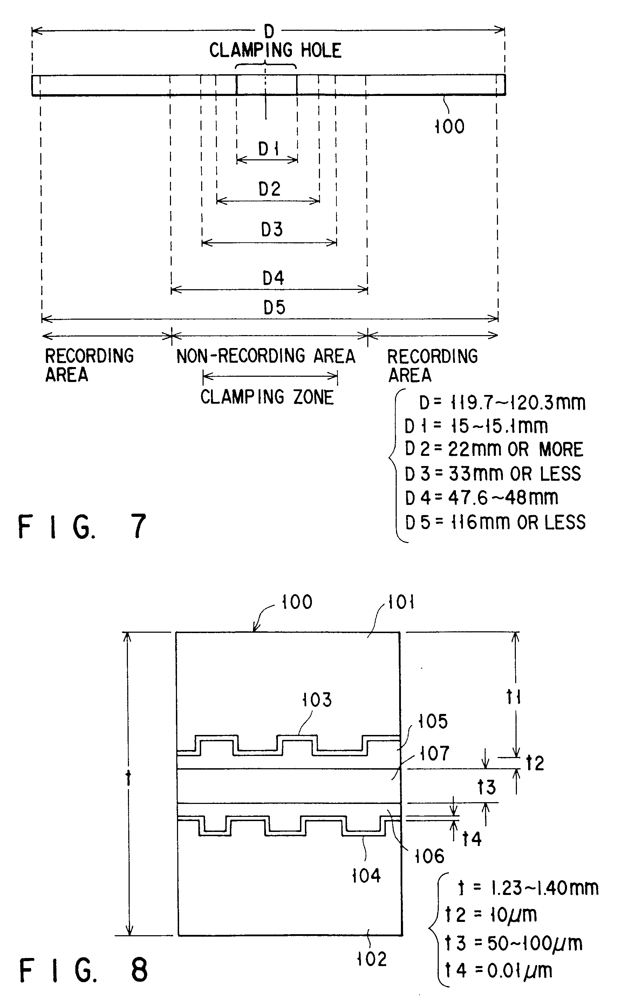

FIG. 7 shows preferred ranges of the diameters of various parts of the optical disk 100. As shown in FIG. 7, the outside diameter D of the optical disk 100 is set at D = 120 ± 0.3 mm, that is, 119.7 mm or more and 120.3 mm or less. The diameter D1 of the clamping hole 108 is set in the range of 15 to 15.1 mm. The inside diameter D2 of the clamping zone 109 is set at 22 mm or more and its outside diameter D3 is set at 33 mm or less. Furthermore, the inside diameter of the recording area (the outside diameter of nonrecording area) is set at 47.6 mm or more and 48 mm or less and its outside diameter D4 is set at 116 mm or less.

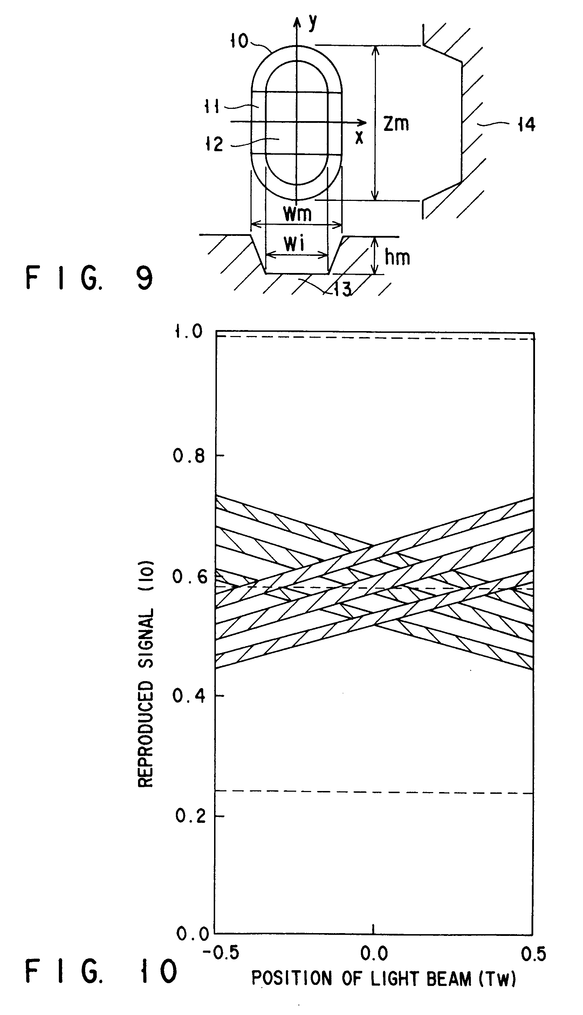

FIG. 8 shows the thickness of various parts of the optical disk 100. As shown in FIG. 8, the total thickness t of the optical disk 100 is 1.19 mm or more and 1.32 mm or less, the thickness t1 of the substrates 101, 102 is 0.58 mm or more and 0.64 or less, the thickness t2 of the protective layers 105, 106 is 5 μm or more and 10 μm or less, thickness t3 of the adhesive layer 107 is 5 μm or more and 20 μm or less, and further the thickness t4 of the reflecting layers 103, 104 is about 0.01 μm.

The total thickness t of the optical disk 100 in the recording area of FIG. 7 is the sum of the thicknesses of the substrates 101, 102, the protective layers 105, 106, the adhesive layer 106, and the reflecting layers 103, 104 (2 × t1 + 2 × t2 + t3 + 2 × t4), which is in the range of 1.19 to 1.32 mm. Since it is expected that a label of 0.1 to 0.2 mm thick to give a description of the information recorded on the optical disk 100 will be put in the area outside the clamping zone 109 in the nonrecording area of FIG. 7, the total thickness t of the optical disk 100 will be (2 × t1 + 2 × t2 + t3 + 2 × t4) plus the thickness of the label, and therefore in the range of 1.29 to 1.52 mm, for example.

As seen from the example of the numerical values shown in FIG. 8, the thicknesses t2 and t3 of the protective layers 105, 106 and the adhesive layer 107 are on the order of microns and the thickness t4 of the reflecting layer 103 is on the order of angstroms, with the result that the thickness t1 of the substrates 101, 102 accounts for most of the total thickness t. The thicknesses t2, t3, and t4 of the protective layers 105, 106, the adhesive layer 107, and the reflecting layer 103 cannot be made too thick for reasons of processing. Therefore, increasing the total thickness t of the optical disk 100 means increasing the thickness of the substrates 101, 102. With the thicknesses t2, t3, and t4 of the protective layers 105, 106, the adhesive layer 107, and the reflecting layers in the practical ranges, to realize the lower limit 1.19 mm of the total thickness t of the optical disk 100 necessary to suppress the degree of a deviation in the optical disk 100 to the range of ± 0.3 °, the thickness t1 of the substrates 101, 102 should be set at 0.58 mm or more.

With the optical disk 100 thus constructed, each of the substrates 101, 102 is flexible. However, when the first and second information recording members 111, 112 containing the substrates 101, 102 as respective components are laminated together, the optical disk 100 as a whole has a higher stiffness than that of the substrates 101, 102, or is more inflexible than the substrates 101, 102. Furthermore, although the degree of a deviation in the optical disk 100 as a whole is in the range of ± 0.3 °, the degree of a deviation in the substrates 101, 102 alone exceeds the range of ± 0.3 ° at the same rotation speed.

Increasing the thickness t1 of the substrates 101, 102 (hereinafter, referred to as the substrate thickness) reduces the degree $\theta$ of deviation because the total thickness t of the optical disk 100 increases. Making the substrate thickness too large, however, results in a decrease in the window margin in performing data identification at the signal processing circuit 215 of FIG. 2, leading to an increase in the error rate of the compressed moving-picture information inputted to the MPEG2 decoder/controller 217. To avoid this problem, with the present invention, the upper limit of the substrate thickness t1 is set at 0.64 mm. Hereinafter, the reason for this will be explained.

FIG. 9 is a drawing to help explain the shape of a pit formed in the substrates 101, 102 of the optical disk 100. As shown in FIG. 9, the pit 10 is shaped like a soccer stadium and has a trapezoidal cross section. The inner wall 11 of the pit 10 is a downward-inclined portion and the bottom 12 is almost flat. Numeral 13 indicates a cross section of the pit 10 along the radius of the optical disk, 14 a cross section of the pit along the circumference of the optical disk (along the track), Wm the dimension of the top of the pit 10 across the track width (the top width), Wi the dimension of the bottom of the pit 10 across the track width (the bottom width), hm the depth of the pit 10, and Zm the length of the pit 10 along the track. The shape of the pit 10 is reflected in the shape of the surface of the reflecting layers 103, 104.

FIG. 10 shows the reproduced signal that the optical disk apparatus of FIG. 2 produced from the optical disk 100 by a computer simulation using a known diffraction model.

The parameters related to the optical disk apparatus are used in the simulation as follows:

Laser wavelength $\lambda$ : 650 nm
Numerical aperture NA of the objective lens: 0.6
Beam filling rate across the disk radius: 0.58
Beam filling rate along the disk circumference: 0.31

The parameters related to the optical disk 100 are determined as follows:

Refractive index of the substrate: 1.58

Thickness of the substrate: 0.6 mm

Track pitch Tp: 0.72 μm

Width of the detection window (window width) Tw: 0.12 μm

Pit top width Wm: 0.35 μm

Pit bottom width Wi: 0.20 μm

Pit depth: 0.2 ($\lambda$/n) (n: refractive index of the substrate)

It is assumed that the (d, k) = (3, 17) system in RLL (run length limited) modulation coding and modulation codes with the code rate (m/n) = 4/9 are used as the information recorded on the optical disk 100. This corresponds to a recording density at which 4.5 Gbytes of information is recorded on one side of the optical disk 100.

FIG. 10 shows the variety of the reproduced signal with the pit edge position in the range of ± 0.5Tw in the case where reproduction is effected from the optical disk 100 on which pit length recording has been done using the above modulation codes. Under the restriction of the run length of modulation codes, as the pattern (pit pattern) of the reproduced signal that allows the pit edge position to appear in the range of ± 10Tw, there are one hundred rising signals (signals rising to the right in the figure) and one hundred falling signals (signals falling to the left) corresponding to the pit edge in the center position of FIG. 10. In FIG. 10, these one hundred types of reproduced signals are drawn one on top of another. Furthermore, the reproduced signals are drawn one on top of another in these four cases: a case where there is no pit on the adjacent tracks on both sides of the target track on which the light beam is focused, a case where there are long pits, a case where there are the starting end of long pits, and a case where there are the terminating end of long pits. FIG. 10 shows an example in a case where the disk tilt angle $\phi$ explained in FIG. 4 is set at 10 mrad (in the radial direction). When a practical optical disk apparatus is designed, taking mass production into account, about 10 mrad must be allowed for the disk tilt angle $\phi$. With the present invention, by limiting the degree $\theta$ of a deviation in the optical disk 100 rotating at a specific rotation speed (1350 rpm) to the range of ± 0.3 ° (about ± 5.24 mrad), the requirements for the accuracy of the installation angle of the optical head are eased.

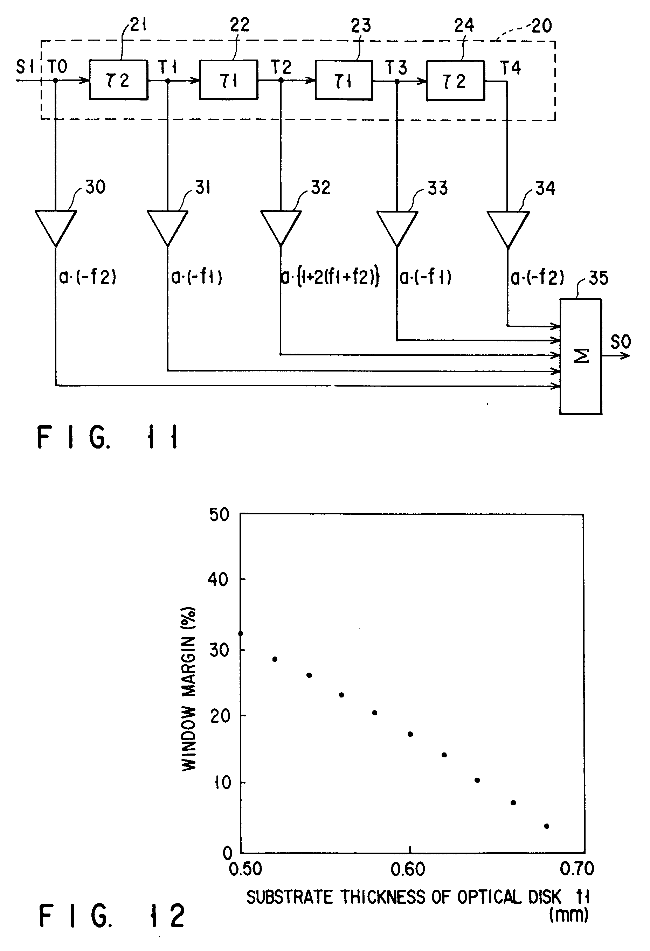

FIG. 10 further shows the waveform of the reproduced signal that has undergone signal processing at the waveform equalization circuit. FIG. 11 is a block diagram of the waveform equalization circuit contained in the signal processing circuit 215 of FIG. 2. The equalization circuit is a transversal filter waveform equalization circuit containing a delay circuit 20, multipliers 30 to 34 for weighting factor, and an adder 35. The reproduced signal Si from the amplifier array 213 of FIG. 2 is inputted to the delay circuit 20. The delay circuit 20 is composed of stages of unit delay elements cascade-connected (in this example, four stages of unit delay elements 21, 22, 23, and 24 cascade-connected) and has a plurality of taps T0, T1, T2, T3, and T4. When the reproduced signal Si is an analog signal, the delay circuit 20 is made up of an analog signal delay line, such as a delay circuit and CCD. The unit delay element 21 and unit delay element 24 have a delay time of $\tau$2, and the unit delay element 22 and unit delay element 23 has a delay time of $\tau$1. The unit delay elements 21, 22, 23, and 24 are located between taps T0 and T1, between T1 and T2, between T2 and T3, and between T3 and T4, respectively. The respective delay times (that is, the delay time between adjacent taps) are referred to as tap intervals. The tap intervals are usually set to $\tau$1 = $\tau$2 = $\tau$.

The output signals from the individual taps T0, T1, T2, T3, and T4 are multiplied by a(-f2), a(-f1), a{1+2(f1+f2)}, a(-f1), and a(-f2) (these are called tap coefficients) at the multipliers 30, 31, 32, 33, and 34, respectively, and then the results are added at the adder 35, which produces an output signal So subjected to waveform equalization. Here, "a" is a constant except for 0 and may be positive or negative. The tap coefficient by which the output signal from the central tap T3 (the main tap) is multiplied is set at a{1+2(f1+f2)} so that the sum of the tap coefficients by which the output signals from the respective taps T0, T1, T2, T3, and T4 are multiplied may be a. The reason for this is that when the input signal (reproduced signal Si) to the waveform equalization circuit is a direct current, the output signal So is also a direct current, enabling the waveform equalization circuit to be considered as a simple direct-current amplifier with an amplification factor of "a."

In this case, if the signal passing through the multiplier 32 connected to the output signal from the central tap (the main tap) T2 of the delay circuit 20 is considered to be the main component, the waveform equalization of the reproduced signal Si can be effected by adding to the main component the signals ± $\tau$1, ± ($\tau$1 + $\tau$2) before and after the output signal from the main tap T2 multiplied by the tap coefficients different from the tap coefficient for the output signal from the main tap T2. The reason for multiplying the output signals from the taps T0, T1, T3, and T4 before after the main tap T2 by the tap coefficients having symmetrical values is that both of the shape of the mark on the optical disk 100 and the shape of the light beam from the light head are symmetrical back and forth (along the track), that is, with respect to the time axis. When such symmetry does not hold, breaking the symmetry of the tap coefficients in the waveform equalization circuit may lead to a good characteristic.

By waveform-equalizing the reproduced signal at the waveform equalization circuit, the window margin shown below can be expanded. In this case, the total delay time of the waveform equalization circuit was set to $\tau$1 = $\tau$2 = 4Tw and the ratio of five tap coefficients was set to -f2:-f1:{1+2(f1+f2)}:-f1:-f2 , where f1 = 0.045 and f2 = 0.03. The preferable ranges of f1 and f2 are

$0.01 \leq f1 \leq 0.05$ and $0.01 \leq f2 \leq 0.04$ respectively, or $0.03 \leq f1 \leq 0.07$ and $0.15 \leq f2 \leq 0.04$ respectively.

By drawing a diagram as shown in FIG. 10 by computer simulation, margins under bad conditions in the range where the operation should be guaranteed can be discussed. The principle model for such calculations has been well known and requires an extensive volume of calculations under various conditions as described above. Only after such calculations, the margins can be discussed.

As shown in FIG. 10, for the reproduced signals, each of a set of rising signals and a set of falling signals is gathered into three groups. These three groups indicate the signals in the case where there are no pits in the pattern of each of two adjacent tracks, the case where the starting end or the terminating end of pits exist, and the case where long pits exist, from the top in that order. When the pattern of both adjacent tracks does not fall under these cases, the signal waveform is obtained in the form of filling the gaps.

Since the range of $\pm 0.5$Tw on the abscissa of FIG. 10 corresponds to the detection window width (window width) in performing data identification at the data identification circuit in the signal processing circuit 215 of FIG. 2, when the rising position or falling position of the reproduced signal supplied from the waveform equalization circuit has exceeded the range, the data identification circuit cannot perform data identification correctly, causing an error. Therefore, when a certain threshold value is set for the X-shaped reproduced signal group, correct reproduction cannot be effected unless the position where the reproduced signal traverses the threshold value is within the detection window width. The width of the range of the position where the reproduced signal traverses the threshold value corresponds to jitter. The value obtained by dividing the jitter by the detection window width Tw is the quantity called the window occupation rate and usually expressed by %. The value obtained by subtracting the window occupation rate from 100% is called the window margin. In the calculation, the effects of interference between codes, crosstalk, and disk inclination have been taken into account, but laser noise, noise from the electric system including the electronic circuitry, and medium noise have not been taken into consideration. For system design, to perform reproduction correctly even under these effects, it is necessary to allow for a value larger than a certain constant as a widow margin, specifically, for example, 10% or more.

For instance, when the information is reproduced via an optical system with $\lambda = 650$ nm and NA = 0.6 from the optical disk 100 on which the information has been recorded at a high density with a window width of 0.12 $\mu$m, fluctuations in (jitters of) the pit edge position are much larger than those of a CD and the window width Tw is much smaller than that of a CD. It has been verified by experiments that when all factors for degrading the signal, including laser noise and noise from the electric system have been taken into account, the window margin must be made 10% or more to realize an error rate of $10^{-4}$ or less for the reproduced signal from the optical disk 100.

As described above, it is better to make the substrate thickness t1 larger to reduce the degree $\theta$ of a deviation in the optical disk 100. How thick the substrate can be made depends on whether 10% is secured for the window margin. Namely, the upper limit of the substrate thickness t1 is allowed until the window margin has reached the range of 10% or more.

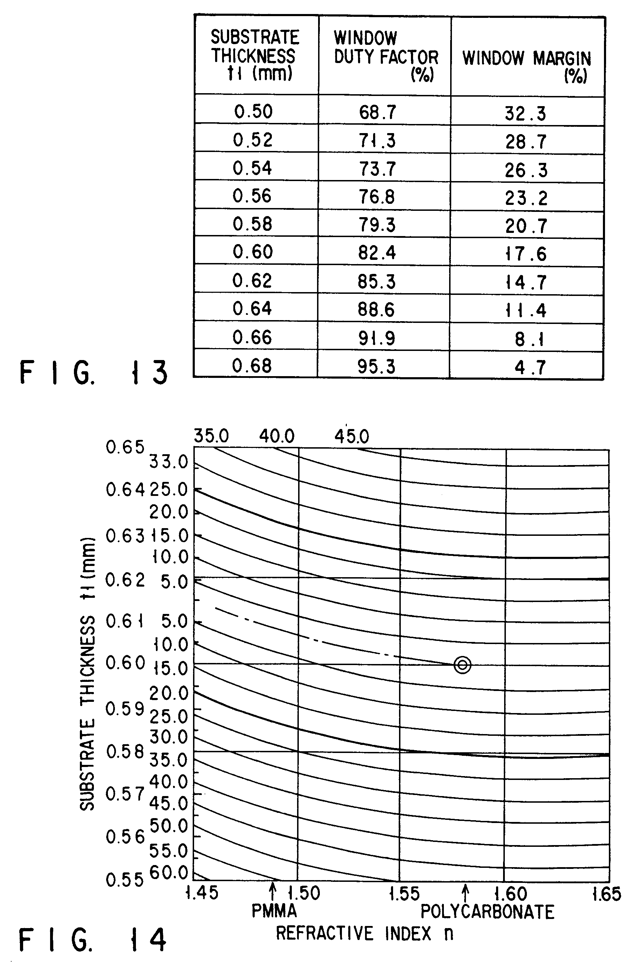

FIG. 12 shows the dependence of the window margin on the substrate thickness. The diagram of FIG. 12 is obtained by basically repeating the same simulation calculation as that in FIG. 10 each time the substrate thickness t1 is changed as shown in FIG. 13. In this case, the tap coefficients in the waveform equalization circuit of FIG. 11 are optimized for each calculation. As seen from FIG. 12, the substrate thickness t must be 0.64 mm or less to secure 10% or more as the window margin. This has been revealed only by the systematic analysis conducted by the inventors of the present invention, taking into account the various factors for degrading the signal and the effects of the waveform equalization circuit. In this case, the upper limit of the total thickness t of the optical disk 100 is 1.32 mm.

The reason why increasing the substrate thickness t1 decreases the window margin is that increasing the substrate thickness t1 results in an increase in the aberration of the light beam caused at the substrates 101, 102 as a result of the inclination of the optical disk 100. Specifically, as the aberration of the light beam become larger, the diameter of the spot of the reproducing light beam focused on the reflecting layers 103, 104 of the optical disk 100 widens, and the sidelobe becomes greater, increasing crosstalk (i.e., the amount of leakage of the reproduced signal between adjacent tracks on the optical disk 100).

The rms value of the aberration was computed using a geometrical model for a case where an ideal lens whose aberration has been corrected completely for a lens load with a refractive index of 1.58 and a thickness of 0.6 mm is used with an optical disk 100 with different refractive indexes of n and substrate thicknesses t1. The procedure for the computation is as follows.

First, the focal point of the paraxial ray is determined to be a reference. An increase and decrease in the optical path length from the objective lens aperture pupil surface to the reference point, that is, the wavefront aberration, is obtained as a function of the coordinates of the aperture pupil surface. The wavefront aberration thus obtained contains the components due to the defocusing of the reproducing light beam. The defocusing, however, is corrected by focusing controls so that the components are subtracted from the wavefront aberration and then the mean square of the residual is calculated as the rms value (root mean square). To subtract the defocused components from the wavefront aberration, the best fit spherical surface for the cophasal surface was obtained by the method of least squares and then the mean square of the residual was computed as the rms value.

FIG. 14 shows the computation results, with the substrate refractive index n on the abscissa, the substrate thickness t1 on the ordinate, and the rms values of the aberration at each point on the coordinate plane being represented by contour lines. One-thousandth of the laser wavelength $\lambda$ (= 650 nm) is used as a unit. The triple circle indicates a point according to the load specification of the objective lens, where the aberration becomes 0. The substrate refractive index n is n = 1.58 when the material of the substrates 101, 102 is polycarbonate, and is n = about 1.49 when the material is PMMA. From these results, it is understood that the substrate thickness t1 should be made larger when the substrate refractive index n is smaller than that in the lens load specification.

The area enclosed by a bold solid line indicates the range determined by the optical disk of the present invention, where the substrate refractive index n is set to the range of 1.45 or more and 1.65 or less and the substrate thickness t1, as described earlier, is set to the range of 0.58 mm or more and 0.64 mm or less.

## Claims

1. An optical disk comprising:
    a first member (111), which has a disk-shaped first transmission substrate (101), a reflecting layer (103) provided on said first transmission substrate (101), and a protective layer (105) provided on said reflecting layer (103), for recording the desired information;
    an adhesive layer (107) having a first surface and a second surface bonded to said protective layer (105); and
    a second member (112) having at least a second transmission substrate (102) bonded to the first surface of said adhesive layer (107), characterized in that
    the thickness of said optical disk is 1.19 mm or more and the degree of a deviation in said optical disk rotating at a specific rotation speed is within ± 0.3 °.

2. An optical disk according to claim 1, characterized in that the thickness of said optical disk is 1.32 mm or less.

3. An optical disk comprising:
    a first member (111), which has a disk-shaped first transmission substrate (101), a reflecting layer (103) provided on said first transmission substrate (101), and a protective layer (105) provided on said reflecting layer (103), for recording the desired information;
    an adhesive layer (107) having a first surface and a second surface bonded to said protective layer (105); and

    a second member (112) having at least a second transmission substrate (102) bonded to the first surface of said adhesive layer (107), characterized in that
    the thickness of each of said first and second transmission substrate (101, 102) is 0.58 mm or more and 0.64 or less.

4. An optical disk comprising:
    a first member (111), which has a disk-shaped first transmission substrate (101), a reflecting layer (103) provided on said first transmission substrate (101), and a protective layer (105) provided on said reflecting layer (103), for recording the desired information;
    an adhesive layer (107) having a first surface and a second surface bonded to said protective layer (105); and
    a second member (112) having at least a second transmission substrate (102) bonded to the first surface of said adhesive layer (107), characterized in that
    the degree of a deviation in said optical disk rotating at a specific rotation speed is within ± 0.3 °.

5. An optical disk according to claim 4, characterized in that said specific rotation speed is 1350 rpm.

6. An optical disk according to any one of claims 1, 3 or 4, characterized in that said second member (112) further includes a reflecting layer (104) provided on said second transmission substrate (102) and a protective layer (106) provided on said reflecting layer (104), and records the desired information.

7. An optical disk according to any one of claims 1, 3 or 4, characterized in that the diameter of at least said first transmission substrate (101) is 119.7 mm or more and 120.3 mm or less.

8. An optical disk according to any one of claims 1, 3 or 4, characterized in that at least said first transmission substrate (101) is made of a material whose refractive index is 1.45 or more and 1.65 or less.

9. An optical disk according to any one of claims 1, 3 or 4, characterized in that the material of at least said first transmission substrate (101) is one of polycarbonate and a resin including polycarbonate, and PMMA.

10. An optical disk according to any one of claims 1, 3 or 4, characterized in that said adhesive layer (107) is made of hot-melt adhesive.

11. An optical disk according to any one of claims 1, 3 or 4, characterized in that said reflecting layer (103) is made of an aluminum film.

12. An optical disk according to any one of claims 1, 3 or 4, characterized in that said protective layer (105) is made of photo-setting resin.

13. An optical disk according to any one of claims 1, 3 or 4, characterized in that at least said first transmission substrate (101) is flexible and said optical disk is more rigid than said first transmission substrate (101).

14. An optical disk according to any one of claims 1, 3 or 4, characterized in that the degree of a deviation in at least said first transmission substrate (101) rotating at said specific rotation speed exceeds the range of ± 0.3 °.

15. An optical disk comprising:

a first member (111), which has a disk-shaped first transmission substrate (101), a reflecting layer (103) provided on said first transmission substrate (101), and a protective layer (105) provided on said reflecting layer (103), for recording the desired information;

an adhesive layer (107) having a first surface and a second surface bonded to said protective layer (105); and

a second member (112) having at least a second transmission substrate (102) bonded to the first surface of said adhesive layer (107), characterized in that

the degree of a deviation in at least said first transmission substrate (101) rotating at said specific rotation speed exceeds the range of ± 0.3 °, and

the degree of a deviation in said optical disk rotating at said specific rotation speed is within ± 0.3 °.

16. An optical disk apparatus comprising:

an optical disk (100) according to claim 4;

rotating means (201, 202, 220) for rotating said optical disk (100) at a specific rotation speed;

light projecting means (206, 207) for projecting a light beam on said optical disk (100) via an objective lens (208);

light sensing means (210, 211, 212, 213) for sensing the reflected light of the light beam projected by said light projecting means (206, 207) on said optical disk (100);

signal reproducing means (215) for producing from the output signal of said light sensing means (210, 211, 212, 213) a reproduced signal corresponding to the information recorded on said optical disk (100); and

information restoring means (216) for restoring the information recorded on said optical disk (100) from the reproduced signal supplied from said reproducing means (215), characterized in that

the tilt angle of said optical disk (100) to said light beam, including the degree of a deviation in said optical disk (100) rotating at said specific rotation speed, is 10 mrad or less.

17. An optical disk apparatus according to claim 16, characterized in that said signal reproducing means (215) includes data identifying means for identifying data in the reproduced signal equalized at said waveform equalization means, and waveform equalization means for equalizing the waveform of said reproduced signal, and

said information restoring means (216) includes error correcting means for correcting errors in the data obtained at said data identifying means, and decoding means for restoring the information recorded on said optical disk by decoding the data subjected to error correction at said error correcting means.

18. An optical disk apparatus according to claim 16 or 17, characterized in that the numerical aperture of said objective lens is almost 0.6 and the wavelength of said light beam is almost 650 nm.

F I G. 1 A

F I G. 1 B

F I G. 3

F I G. 4

FIG. 1C

FIG. 1D

FIG. 1E

FIG. 1F

F I G. 2

F I G. 5 A

F I G. 5 B

F I G. 6

CLAMPING HOLE

D

D1

D2

D3

D4

D5

100

RECORDING AREA

NON-RECORDING AREA

CLAMPING ZONE

RECORDING AREA

D = 119.7~120.3mm
D1 = 15~15.1mm
D2 = 22mm OR MORE
D3 = 33mm OR LESS
D4 = 47.6~48mm
D5 = 116mm OR LESS

F I G. 7

100   101

103

105

107

t1

t2

t3

t4

104   106

102

t = 1.23~1.40mm
t2 = 10μm
t3 = 50~100μm
t4 = 0.01μm

F I G. 8

F I G. 9

F I G. 10

POSITION OF LIGHT BEAM (Tw)

F I G. 1 1

F I G. 1 2

| SUBSTRATE THICKNESS †1 (mm) | WINDOW DUTY FACTOR (%) | WINDOW MARGIN (%) |
|---|---|---|
| 0.50 | 68.7 | 32.3 |
| 0.52 | 71.3 | 28.7 |
| 0.54 | 73.7 | 26.3 |
| 0.56 | 76.8 | 23.2 |
| 0.58 | 79.3 | 20.7 |
| 0.60 | 82.4 | 17.6 |
| 0.62 | 85.3 | 14.7 |
| 0.64 | 88.6 | 11.4 |
| 0.66 | 91.9 | 8.1 |
| 0.68 | 95.3 | 4.7 |

F I G. 13

F I G. 14